# EUROPÄISCHE PATENTSCHRIFT

(11) **EP 2 550 855 B1**
(45) Veröffentlichungstag und Bekanntmachung des Hinweises auf die Patenterteilung: **22.10.2014**
(21) Anmeldenummer: 12161390.5
(22) Anmeldetag: 27.03.2012
(51) Int. Cl.: A01G 1/08

(54) **Begrenzungsmauer mit Versteifungsvorrichtung**
Boundary wall with reinforcement device
Mur d'enceinte avec dispositif de durcissement

(30) Priorität: 29.07.2011 AT 11122011
(43) Veröffentlichungstag der Anmeldung: 30.01.2013
(73) Patentinhaber: Wüster, Heinrich, 6460 Imst/Tirol (AT)
(72) Erfinder: Wüster, Heinrich, 6460 Imst/Tirol (AT)
(74) Vertreter: Grabherr, Claudia

(56) Entgegenhaltungen:
- EP-B1- 0 981 948
- DE-U1- 29 807 973
- US-A- 5 445 362
- US-A- 6 085 458
- US-A1- 2010 186 293

## Beschreibung

Die Erfindung betrifft eine Begrenzungsmauer für Beeteinfassungen, Frühbeete, Abgrenzungen in Garten- und Grünanlagen oder dergleichen, umfassend untereinander verbindbare langgestreckte Bauelemente mit einem Grundkörper, der an seinen Stirnseiten vorstehende Endabschnitte mit angeformten Verbindungselementen zur Aufnahme von Kupplungselementen aufweist.

Für die Errichtung von Begrenzungsmauern für Beeteinfassungen, Frühbeete, Abgrenzungen in Garten und Grünanlagen oder dergleichen sind Vorrichtungen aus dem Stand der Technik bekannt. Beispielsweise zeigt die EP 0 981 948 B1 eine Begrenzungsmauer mit aneinandergereihten und untereinander verbundenen langgestreckten Bauelementen, die jeweils einen als nach unten offenes Hohlprofil ausgebildeten Grundkörper besitzen, der an seinen seitlichen Stirnseiten mit seitlich vorstehenden Endabschnitten versehen ist, die angeformte Verbindungselemente tragen. Diese Verbindungselemente sind zur Aufnahme von Kupplungselementen ausgeführt, wodurch mehrere Bauelemente miteinander verbunden werden können. Zu diesem Zweck sind Kupplungselemente bekannt, welche die nebeneinander angeordneten unteren Endabschnitte der Bauelemente überbrücken, wobei diese Kupplungselemente ihrerseits Verbindungselemente aufweisen, die zu den Verbindungselementen der unteren Endabschnitte der Bauelemente komplementär ausgeführt sind. Beim Zusammenbau werden die Kupplungselemente auf die Verbindungselemente der nebeneinander angeordneten unteren Endabschnitte der Bauelemente von oben aufgesetzt.

Beim Herstellen derartiger Begrenzungsmauern ergibt sich jedoch in der Praxis das Problem, dass beim Befüllen des Hochbeets mit Erde oder anderen Füllmaterialien die Seitenwände dazu neigen, sich zu verschieben bzw. zu verdrehen. Zwar sorgen die Kupplungselemente dafür, dass die einzelnen Bauelemente miteinander fest verbunden bleiben, die Kupplungselemente können jedoch eine axiale Verdrehung der aneinander angebrachten Bauelemente nicht vollständig verhindern.

Insbesondere in den Ecken, die im allgemeinen rechtwinklig oder im Wesentlichen rechtwinklig ausgeführt sind, erfolgt aufgrund des Druckes der eingefüllten Füllmaterialien eine Ausbeulung der Bauelemente, wobei sich die Verbindungselemente der Bauelemente verdrehen.

Die technische Aufgabe der vorliegenden Erfindung besteht somit darin, eine Begrenzungsmauer zu schaffen, welche die Bausteine versteift und gegen Verdrehung sichert. Die Begrenzungsmauer soll leicht und einfach herstellbar sein und insbesondere gegenüber der aus dem Stand der Technik bekannten Begrenzungsmauer keine übermäßigen zusätzlichen Kosten verursachen. Die Vorrichtung zur Versteifung soll robust sein und die Begrenzungsmauer in verschiedensten geometrischen Anordnungen zuverlässig in Position halten, auch wenn Füllmaterial in hohen Mengen in den abgegrenzten Bereich eingebracht wird.

Diese Aufgabe wird durch die Merkmale des Anspruchs 1 gelöst.

Erfindungsgemäß ist vorgesehen, dass dieses Koppelelement zusätzlich zu den bekannten Kupplungselementen vorgesehen ist. Es ist ein wesentliches Merkmal der Erfindung, dass das Koppelelement nebeneinanderliegende Bauelemente miteinander verbindet. Darüber hinaus kann erfindungsgemäß vorgesehen sein, dass zwei oder mehrere Koppelelemente miteinander verbunden sind und somit eine Versteifung der gesamten Konstruktion oder von Teilen der gesamten Konstruktion ermöglichen.

Erfindungsgemäß kann vorgesehen sein, dass die Mittel zur formschlüssigen Aufnahme des Koppelelementes im Bereich der Endabschnitte der Bauelemente als einseitig offene Schlitze oder Nuten in den Verbindungselementen ausgeführt sind. Somit können die erfindungsgemäßen Koppelelemente mit entsprechenden Verbindungsmitteln in diese einseitig offenen Schlitze oder Nuten eingeführt werden und dort formschlüssig fixiert werden.

Erfindungsgemäß kann vorgesehen sein, dass die Koppelelemente plattenförmig ausgeführt sind. Insbesondere können die Koppelelemente als Kunststoffplatten ausgeführt sein. Die Koppelelemente können an ihrem Umfang über zumindest zwei T-förmige Koppelstege verfügen, die einen Halsabschnitt und einen Kopfabschnitt aufweisen. Erfindungsgemäß weist der Halsabschnitt eine geringere Breite als der Kopfabschnitt auf. Der Halsabschnitt kann derart ausgeführt sein, dass er passgenau in den Schlitz bzw. die Nut der Verbindungselemente einführbar ist, und der Kopfabschnitt kann im eingeführten Zustand den Schlitz im Inneren der Verbindungselemente überragen und die Lage des Koppelelementes formschlüssig fixieren.

Es ist erfindungsgemäß vorgesehen, dass ein Koppelelement zumindest zwei derartige Koppelstege aufweist, um ein Koppelelement für die Fixierung von zumindest zwei nebeneinander liegenden bzw. angrenzenden Bauelementen verwenden zu können. Die Koppelelemente können aber auch über mehr als zwei Koppelstege verfügen. Weiters können die Koppelelemente auch derart ausgeführt sein, dass sie sowohl eine Kopplung zweier im Wesentlichen geradlinig verlaufender angrenzender Bauelemente, als auch eine Kopplung zweier im Wesentlichen rechtwinklig oder in beliebig anderem Winkel angeordneter angrenzender Bauelemente ermöglichen. Es kann insbesondere vorgesehen sein, dass das Koppelelement über vier Koppelstege verfügt.

Um nicht nur eine zusätzliche Verbindung zweier angrenzender, (sei es geradlinig oder rechtwinklig oder in einem beliebigen Winkel) Bausteine zu ermöglichen, sondern darüber hinaus die Versteifung unterschiedlicher, insbesondere gegenüberliegender Begrenzungsmauern zu ermöglichen, kann erfindungsgemäß vorgesehen sein, dass das Koppelelement zumindest eine Öffnung, vorzugsweise eine Bohrung zur Aufnahme von zumindest einer versteifenden, vorzugsweise metallischen Strebe umfasst, wobei diese Strebe zur Verbindung zweier gegenüberliegender Kopplungselemente ausgeführt ist. Insbesondere kann die Strebe zur Verbindung zweier schräg gegenüberliegender Kopplungselemente ausgeführt sein, wodurch die Fixierung eines bestimmten Winkels, vorzugsweise 90°, ermöglicht wird. Bei der Strebe kann es sich insbesondere um eine metallische, zug- und druckfeste Strebe handeln.

Darüber hinaus kann das Koppelelement zumindest einen Vorsprung zur Aufnahme eines vorzugsweise metallischen Verbindungsrohres aufweisen, welches zur Verbindung zweier im Wesentlichen gegenüberliegender Koppelelemente ausgeführt sein kann. Insbesondere kann erfindungsgemäß vorgesehen sein, dass die erfindungsgemäßen Streben zur Versteifung von 90°-Verbindungen vorgesehen sind, und die erfindungsgemäßen Verbindungsrohre zur Versteifung parallel verlaufender Begrenzungsmauerkomponenten vorgesehen sind.

Weiters kann erfindungsgemäß vorgesehen sein, dass im Bereich der Verbindungselemente ein die Bauelemente verbindendes Kopplungselement angeordnet ist, dass auf die Verbindungselemente von oben aufgesetzt wird, wie dies aus dem Stand der Technik bekannt ist.

Erfindungsgemäß können weitere mit den Bauelementen verbindbare Grundelemente vorgesehen sein. Diese Grundelemente können ebenfalls Verbindungselemente umfassen, und an ihren Unterseiten Aussparungen zur formschlüssigen Aufnahme zumindest eines versteifenden, die Grundelemente verbindenden Formteils aufweisen.

Dieses erfindungsgemäße Formteil kann als im Wesentlichen hantelförmiges Verriegelungselement ausgeführt sein, das formschlüssig in kreisringausschnittförmige Aussparungen der Verbindungselemente der Grundelemente einsetzbar ist und einer gegenseitigen Verdrehung der Grundelemente entgegenwirkt. Diese Aussparungen können erfindungsgemäß derart ausgestaltet sein, dass sie die erfindungsgemäßen Verriegelungselemente formschlüssig aufnehmen, wobei jeweils zwei Grundelemente durch ein Verriegelungselement miteinander verbunden werden können.

Selbstverständlich können diese erfindungsgemäßen Aussparungen auch an den Unterseiten der Bauelemente selbst vorgesehen sein, wodurch die Verwendung der erfindungsgemäßen Formteile bzw. Verriegelungselemente nicht auf die Grundelemente selbst beschränkt ist.

Diese erfindungsgemäßen Formteile bzw. Verriegelungselemente erlauben es insbesondere, Eckverbindungen weiter zu versteifen und einer gegenseitigen Verdrehung der Bausteine bzw. der Grundelemente entgegenwirkt. Erfindungsgemäß kann weiters vorgesehen sein, dass die Aussparungen Öffnungsnuten zum Einsetzen der Formteile bzw. Verriegelungselemente aufweisen, die in unterschiedlichen Bereichen am Umfang der Verbindungselemente angebracht sind, wodurch beispielsweise 30°-, 45°-, 60°-, oder 90°-Verbindungen mit Hilfe des Formteils versteift werden können.

Weitere erfindungsgemäße Merkmale ergeben sich aus der Beschreibung, den Ansprüchen oder den Figuren.

Die Erfindung wird nun anhand exemplarischer Ausführungsbeispiele beschrieben. Es zeigen:
Fig. 1: eine Begrenzungsmauer aus dem Stand der Technik;
Fig. 2: eine schematische dreidimensionale Ansicht einer Begrenzungsmauer mit einem erfindungsgemäß eingesetzten Koppelelement;
Fig. 3: eine schematische Aufsicht eines erfindungsgemäßen Koppelelementes;
Fig. 4: eine schematische Ansicht einer erfindungsgemäßen Begrenzungsmauer mit drei eingesetzten Koppelelementen;
Fig. 5a - Fig. 5b: schematische Querschnitte durch eine erfindungsgemäße Begrenzungsmauer mit einem erfindungsgemäßen Koppelelement;
Fig. 6a: eine schematische Ansicht eines erfindungsgemäßen Formteils;
Fig. 6b: eine schematische Ansicht der Unterseite zweier mit einem erfindungsgemäßen Formteil versteifter Bauelemente.

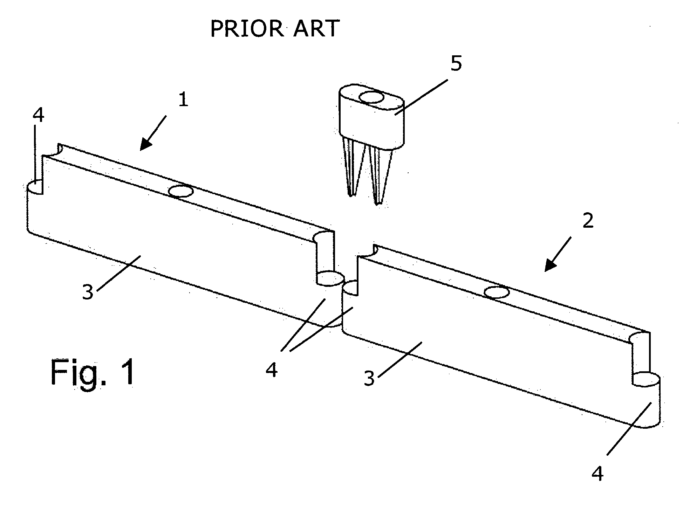

Fig. 1 zeigt eine Begrenzungsmauer aus dem Stand der Technik. Diese umfasst zwei langgestreckte Bauelemente 1, 2. Die Bauelemente 1, 2 bestehen jeweils aus einem Grundkörper 3, der an seinen Stirnseiten vorstehende Endabschnitte mit angeformten Verbindungselementen 4 zur Aufnahme von Kupplungselementen 5 aufweist. Die Bausteine 1, 2 werden in bekannter Art und Weise aneinandergefügt und in einem beliebigen Winkel durch das Kupplungselement 5 miteinander verbunden.

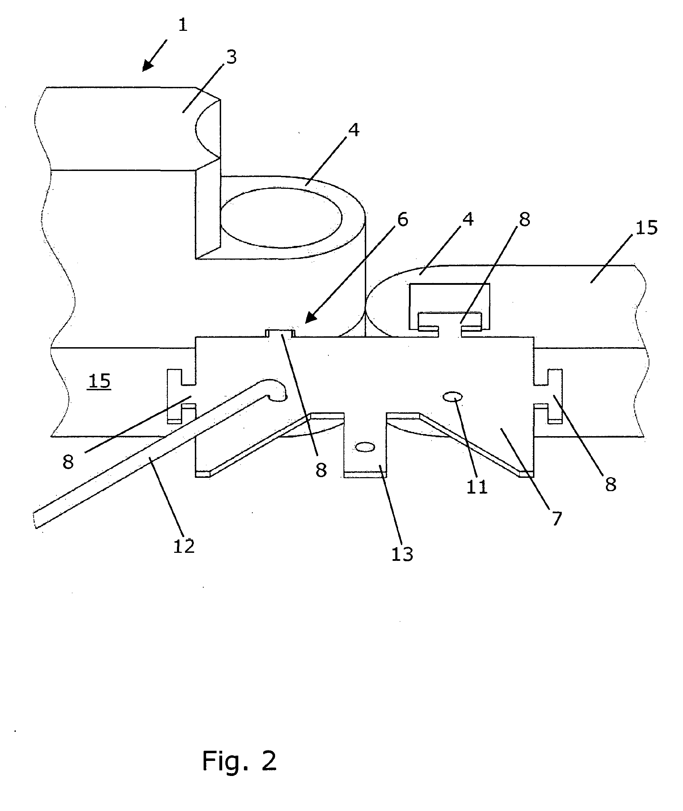

Fig. 2 zeigt eine schematische Ansicht einer erfindungsgemäßen Begrenzungsmauer mit einem ersten Bauelement 1 und zwei Grundelementen 15. Das erste Bauelement 1 umfasst einen Grundkörper 3, der an seinen Stirnseiten vorstehende Endabschnitte mit angeformten Verbindungselementen 4 aufweist, wobei im Bereich der Verbindungselemente 4 eine Nut 6 vorgesehen ist, die zur Aufnahme eines Koppelsteges 8 eines Koppelelements 7 ausgeführt ist. Das Bauelement 2, welches ebenfalls auf den Grundkörper 15 aufgesetzt wird, ist in diesem Ausführungsbeispiel nicht dargestellt. Weiters sind am Koppelelement 7 die Öffnungen 11 zum Einführen der Strebe 12 und der Vorsprung 13 dargestellt. Das Grundelement 15 dient zur Aufnahme der darauf aufzusetzenden Bauelemente 1, 2.

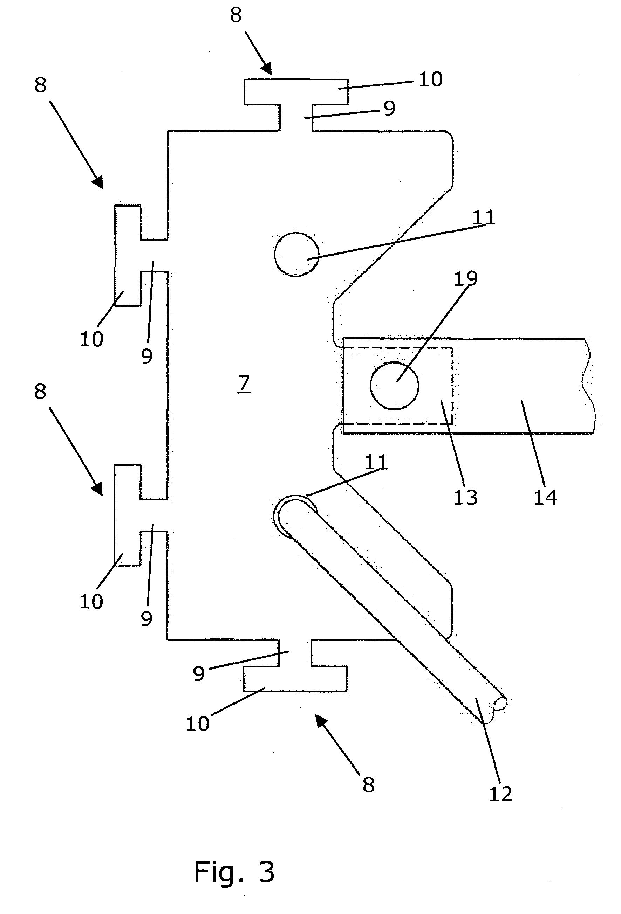

Fig. 3 zeigt ein erfindungsgemäßes Koppelelement 7, das umfangsseitig über vier Koppelstege 8 verfügt. Die Koppelstege 8 verfügen über einen Halsabschnitt 9 und einen Kopfabschnitt 10. Der Halsabschnitt 9 ist derart an die Breite des Schlitzes 6 in den Bauelementen 1, 2 angepasst, dass der Halsabschnitt 9 in diese Stütze bzw. Nuten eingeführt werden kann und eine formschlüssige Verbindung ermöglicht wird. Weiters verfügt das Koppelelement 7 über den Vorsprung 13 zur Aufnahme des Verbindungsrohres 14, der mit einer Öffnung 19 versehen ist, um das Verbindungsrohr 14 am Vorsprung 13 zu fixieren. Diese Fixierung kann beispielsweise mit einer Schraube, einem Bolzen oder einem anderen Befestigungsmittel erfolgen. Weiters ist die Strebe 12 dargestellt, die formschlüssig in eine weitere Öffnung 11 des Koppelelements 7 eingeführt ist.

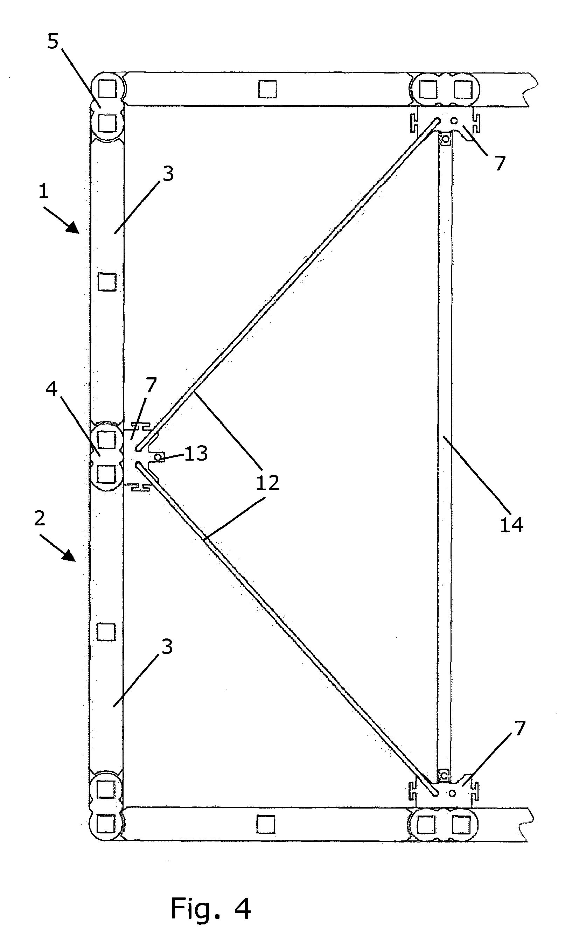

Fig. 4 zeigt die erfindungsgemäße Begrenzungsmauer im zusammengebauten Zustand. Mehrere Bauelemente 1, 2 sind durch die Kupplungselemente 5 miteinander verbunden. Die Kupplungselemente 5 sitzen auf den Verbindungselementen 4 der Bauelemente 1, 2 auf.

Im Bereich dieser Verbindungselemente 4 sind die Koppelelemente 7 vorgesehen, die ihrerseits über die Stege 12 und das Verbindungsrohr 14 miteinander verbunden bzw. versteift sind. Durch eine derartige zwei-dimensionale Versteifung in einer Ebene wird sowohl sichergestellt, dass gegenüberliegende Begrenzungsmauern durch das Verbindungsrohr 14 in ihrem Abstand fixiert gehalten werden, als auch dass rechtwinklige Ecken durch die Streben 12 in ihrem Winkel fixiert bleiben.

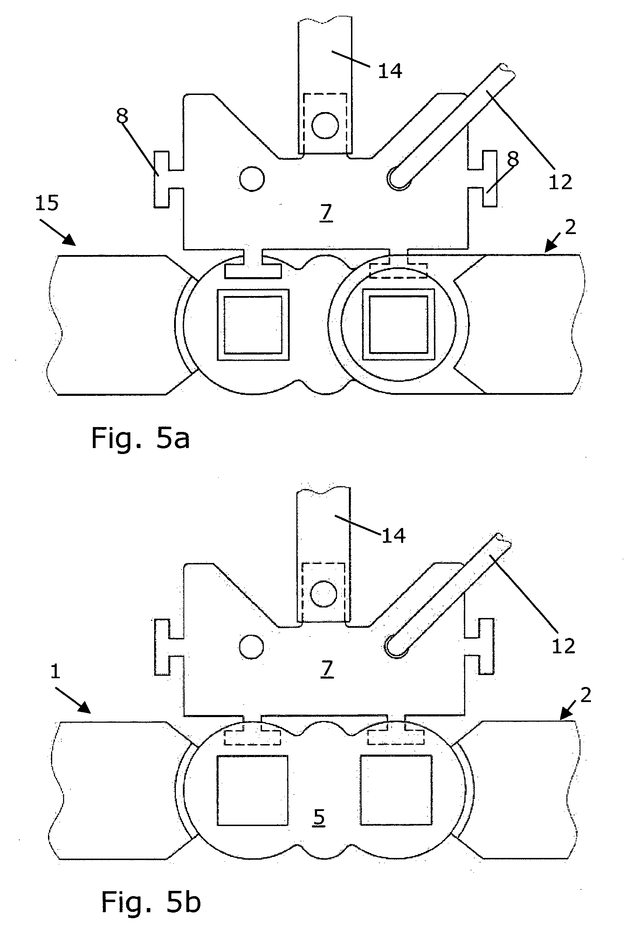

Fig. 5 a zeigt ein Detail aus einer erfindungsgemäßen Begrenzungsmauer im Bereich der Verbindung eines ersten Bauteils 1 mit einem zweiten Bauteil 3. Insbesondere zeigt dieses Bild eine Aufsicht auf das Ausführungsbeispiel aus Fig. 2. Das Koppelelement 7 liegt auf einem Grundelement 15 auf. Ein Bauelement 2 ist auf das Grundelement 15 aufgesetzt. Ein Koppelsteg 8 ist in die Nut 6 des Bauelements 2 eingeführt und teilweise verdeckt. Fig. 5b zeigt die gleiche Ansicht bei Hinzufügen eines zweiten Bauelements 1 und Aufsetzen eines Kupplungselementes 5 auf die Bauelemente. In diesem Fall sind zwei Koppelstege 8 des Koppelelements 7 in die Nuten 6 der Bauelemente 1, 2 eingeführt und nur teilweise sichtbar.

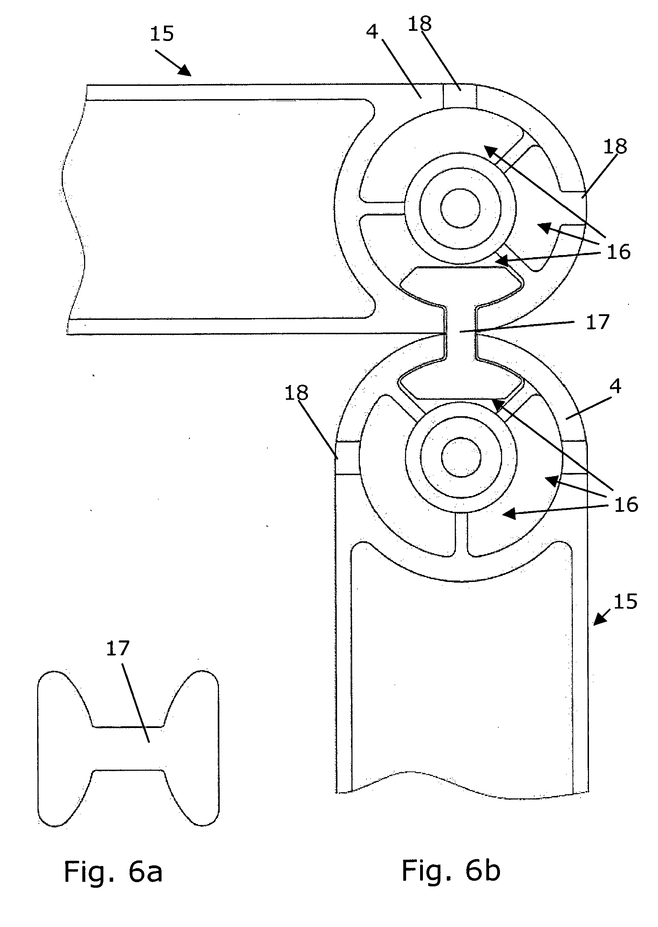

Fig. 6a zeigt das erfindungsgemäße Formteil 17 in Form eines hantelförmigen Verriegelungselements. Fig. 6b zeigt die Verwendung dieses Formteils 17 zur Versteifung einer Eckverbindung einer Begrenzungsmauer. In dieser Fig. 6b ist eine Ansicht der Unterseite zweier Grundelemente 15 gezeigt, die in einer Eckverbindung angeordnet sind. Die Grundelemente 15 verfügen über Aussparungen 16 und Nuten 18 zur Aufnahme der Formteile 17. Die Form der Nuten 18 und Aussparungen 16 ist derart an die Form des Formteils 17 angepasst, dass der Formteil 17 formschlüssig in die Nuten bzw. Aussparungen einsetzbar ist, und einer Verdrehung der Grundelemente 15 im eingesetzten Zustand entgegenwirkt. Die Nuten 18 und die Aussparungen 16 sind derart angeordnet, dass jeweils 90°-Ecken ermöglicht werden. Erfindungsgemäß können jedoch auch andere Anordnungen, beispielsweise 30°-, 60°- oder 45°-Verbindungen vorgesehen sein.

Die Erfindung umfasst nicht ausschließlich die dargestellten Ausführungsformen, sondern auch andere erfindungsgemäße Vorrichtungen gemäß Beschreibung, Figuren oder Patentansprüche. Insbesondere können auch Merkmale, die in unterschiedlichen Ausführungsformen gezeigt sind, miteinander kombiniert werden.

### Bezugszeichenliste

- 1: Bauelement
- 2: Bauelement
- 3: Grundkörper
- 4: Verbindungselement
- 5: Kupplungselement
- 6: Schlitz
- 7: Koppelelement
- 8: Koppelsteg
- 9: Halsabschnitt
- 10: Kopfabschnitt
- 11: Öffnung
- 12: Strebe
- 13: Vorsprung
- 14: Verbindungsrohr
- 15: Grundelement
- 16: Aussparung
- 17: Formteil
- 18: Nut
- 19: Öffnung

## Patentansprüche

1. Begrenzungsmauer für Beeteinfassungen, Frühbeete, Abgrenzungen in Garten- und Grünanlagen oder dergleichen, umfassend untereinander verbindbare langgestreckte Bauelemente (1, 2) mit einem Grundkörper (3), der an seinen Stirnseiten vorstehende Endabschnitte mit angeformten Verbindungselementen (4) zur Aufnahme von Kupplungselementen (5) aufweist,
**dadurch gekennzeichnet, dass**
zumindest zwei Bauelemente (1, 2) an ihren Endabschnitten im Bereich der Verbindungselemente (4) Mittel zur formschlüssigen Aufnahme zumindest eines versteifenden, die Bauelemente (1, 2) miteinander und/oder mit anderen Bauelementen verbindenden Koppelelementes (7) aufweisen.

2. Begrenzungsmauer nach Anspruch 1, **dadurch gekennzeichnet, dass** die Mittel zur Aufnahme des Koppelelementes (7) als einseitig offene Schlitze (6) oder Nuten in den Verbindungselementen (4) ausgeführt sind.

3. Begrenzungsmauer nach Anspruch 2, **dadurch gekennzeichnet, dass** die Koppelelemente (7) plattenförmig ausgeführt sind und an ihrem Umfang über zumindest zwei T-förmige Koppelstege (8) mit einem Halsabschnitt (9) und einem Kopfabschnitt (10) verfügen.

4. Begrenzungsmauer nach Anspruch 3, **dadurch gekennzeichnet, dass** der Halsabschnitt (9) des Koppelsteges (8) passgenau in den Schlitz (6) der Verbindungselemente (4) einführbar ist, und der Kopfabschnitt (10) im eingeführten Zustand den Schlitz (6) überragt und die Lage des Koppelelementes (7) fixiert.

5. Begrenzungsmauer nach Anspruch 3 oder 4, **dadurch gekennzeichnet, dass** das Koppelelement (7) über vier Koppelstege (8) verfügt, die derart am Umfang des Koppelelementes (7) angebracht sind, dass sowohl eine Kopplung zweier im Wesentlichen geradlinig verbundener Bauelemente (1, 2), als auch eine Kopplung zweier im Wesentlichen rechwinklig verbundener Bauelemente ermöglicht wird.

6. Begrenzungsmauer nach einem der Ansprüche 1 bis 5, **dadurch gekennzeichnet, dass** das Koppelelement (7) zumindest eine Öffnung (11), vorzugsweise Bohrung, zur Aufnahme von zumindest einer versteifenden, vorzugsweise metallischen Strebe (12) umfasst, wobei die Strebe (12) zur Verbindung zweier schräg gegenüberliegender Kopplungselemente (7) ausgeführt ist.

7. Begrenzungsmauer nach einem der Ansprüche 1 bis 6, **dadurch gekennzeichnet, dass** das Koppelelement (7) zumindest einen Vorsprung (13) zur Aufnahme eines vorzugsweise metallischen Verbindungsrohres (14) aufweist, wobei das Verbindungsrohr (14) zur Verbindung zweier im Wesentlichen gegenüberliegender Koppelelemente (7) ausgeführt ist.

8. Begrenzungsmauer nach einem der Ansprüche 1 bis 7, **dadurch gekennzeichnet, dass** im Bereich der Verbindungselemente (4) ein die Bauelemente (1, 2) verbindendes Kupplungselement (5) angeordnet ist, das auf die Verbindungselemente (4) von oben aufgesetzt ist.

9. Begrenzungsmauer nach einem der Ansprüche 1 bis 8, **dadurch gekennzeichnet, dass** mit den Bauelementen (1, 2) verbindbare Grundelemente (15) mit Verbindungselementen (4) vorgesehen sind, die an ihren Unterseiten Aussparungen (16) zur formschlüssigen Aufnahme zumindest eines versteifenden, die Grundelemente (15) verbindenden Formteils (17) aufweisen.

10. Begrenzungsmauer nach Anspruch 9, **dadurch gekennzeichnet, dass** das Formteil (17) als im Wesentlichen hantelförmiges Verriegelungselement ausgeführt ist, das formschlüssig in kreisringausschnittförmige Aussparungen (16) der Verbindungselemente (4) einsetzbar ist und einer gegenseitigen Verdrehung der Grundelemente (15) entgegenwirkt.

## Claims

1. A boundary wall for bed edgings, cold frames, boundaries in gardens and public parks or the like, comprising elongated components (1, 2), which can be connected to one another, comprising a base body (3), which, at its front sides, encompasses projecting end sections comprising connecting elements (4), which are integrally molded, for accommodating coupling elements (5),
**characterized in that**
at their end sections in the area of the connecting elements (4), at least two components (1, 2) encompass means for positively accommodating at least one reinforcing coupling element (7), which connects the components (1, 2) to one another and/or to other components.

2. The boundary wall according to claim 1, **characterized in that** the means for accommodating the coupling element (7) are embodied as slits (6), which are open on one side, or as grooves in the connecting elements (4).

3. The boundary wall according to claim 2, **characterized in that** the coupling elements (7) are embodied in a plate-shaped manner and have at least two T-shaped coupling webs (8) comprising a neck section (9) and a head section (10) at their periphery.

4. The boundary wall according to claim 3, **characterized in that** the neck section (9) of the coupling web (8) can be inserted in the slit (6) of the connecting elements (4) iso as to fit accurately, and the head section (10) projects beyond the slit (6) in the inserted state and fixes the position of the coupling element (7).

5. The boundary wall according to claim 3 or 4, **characterized in that** the coupling element (7) has four coupling webs (8), which are attached to the periphery of the coupling element (7) such that both a coupling of two components (1, 2), which are substantially connected in a straight manner, as well as a coupling of two components, which are substantially connected at right angles, is made possible.

6. The boundary wall according to one of claims 1 to 5, **characterized in that** the coupling element (7) comprises at least one opening (11), preferably bore, for accommodating at least one reinforcing, preferably metallic rod (12), wherein the rod (12) is embodied to connect two coupling elements (7), which are located diagonally across from one another.

7. The boundary wall according to one of claims 1 to 6, **characterized in that** the coupling element (7) encompasses at least one projection (13) for accommodating a preferably metallic connecting pipe (14) wherein the connecting pipe (14) is embodied for connecting two coupling elements (7), which are located substantially across from one another.

8. The boundary wall according to one of claims 1 to 7, **characterized in that** a coupling element (5), which connects the components (1, 2) and which is placed onto the connecting elements (4) from the top, is arranged in the area of the connecting elements (4).

9. The boundary wall according to one of claims 1 to 8, **characterized in that** provision is made for base elements (15), which can be connected to the components (1, 2) and which comprise connecting elements (4), which, on their bottom sides, encompass recesses (16) for positively accommodating at least one reinforcing molded part (17), which connects the base elements (15).

10. The boundary wall according to claim 9, **characterized in that** the molded part (17) is embodied as a substantially dumbbell-shaped locking element, which can be positively inserted in circular ring section-shaped recesses (16) of the connecting elements (4) and which prevent the base elements (15) from rotating one another.

## Revendications

1. Mur de délimitation pour des bordures de plates-bandes, des châssis de couches, des démarcations dans des jardins et des espaces verts ou similaires, comprenant des éléments de construction (1, 2) allongés, susceptibles d'être reliés les uns aux autres, avec un corps de base (3), qui sur ses faces frontales comporte des parties d'extrémité saillantes avec des éléments de liaison (4) rapportés, destinés à recevoir des éléments d'accouplement (5), **caractérisé en ce qu'**au moins deux éléments de construction (1, 2) comportent sur leurs parties d'extrémité, dans la zone des éléments de liaison (4) des moyens pour le logement par complémentarité de forme d'au moins un élément de couplage (7) de rigidification, reliant les éléments de construction (1, 2) les uns aux autres et/ou avec d'autres éléments de construction.

2. Mur de délimitation selon la revendication 1, **caractérisé en ce que** les moyens destinés à recevoir l'élément de couplage (7) sont réalisés en tant qu'encoches ou rainures (6) ouvertes sur un côté dans les éléments de liaison (4).

3. Mur de délimitation selon la revendication 2, **caractérisé en ce que** les éléments de couplage (7) sont réalisés en forme de plaques et disposent sur leur périphérie d'au moins deux barrettes de couplage (8) en forme de T, avec une partie col (9) et une partie tête (10).

4. Mur de délimitation selon la revendication 3, **caractérisé en ce que** la partie col (9) de la barrette de couplage (8) peut s'introduire précisément dans l'encoche (6) des éléments de liaison (4) et **en ce qu'**à l'état introduit, la partie tête (10) chevauche l'encoche (6) et fixe la position de l'élément de couplage (7).

5. Mur de délimitation selon la revendication 3 ou la revendication 4, **caractérisé en ce que** l'élément de couplage (7) dispose de quatre barrettes de couplage (8), qui sont montées sur la périphérie de l'élément de couplage (7) de sorte à permettre aussi bien un couplage de deux éléments de construction (1, 2) reliés sensiblement en ligne droite qu'également un couplage de deux éléments de construction sensiblement reliés à angle droit.

6. Mur de délimitation selon l'une quelconque des revendications 1 à 5, **caractérisé en ce que** l'élément de couplage (7) comprend au moins un orifice (11), de préférence un perçage destiné à recevoir au moins une entretoise (12) de rigidification, de préférence métallique, l'entretoise (12) étant réalisée pour relier deux éléments de couplage (7) opposés en diagonale.

7. Mur de délimitation selon l'une quelconque des revendications 1 à 6, **caractérisé en ce que** l'élément de couplage (7) comporte au moins une saillie (13) destinée à recevoir un tube de liaison (14) de préférence métallique, le tube de liaison (14) étant réalisé pour relier deux éléments de couplage (7) sensiblement opposés.

8. Mur de délimitation selon l'une quelconque des revendications 1 à 7, **caractérisé en ce que** dans la zone des éléments de liaison (4) est placé un élément d'accouplement (5) reliant les éléments de construction (1, 2) qui est placé par le dessus sur les éléments de liaison (4).

9. Mur de délimitation selon l'une quelconque des revendications 1 à 8, **caractérisé en ce que** sont prévus des éléments de base (15) susceptibles d'être reliés avec les éléments de construction (1, 2), avec des éléments de liaison (4), qui sur leurs faces inférieures comportent des échancrures (16) pour le logement par complémentarité de forme d'au moins une pièce moulée (17) de rigidification, reliant les éléments de base (15).

10. Mur de délimitation selon la revendication 9, **caractérisé en ce que** la pièce moulée (17) est réalisée en tant qu'élément de verrouillage sensiblement en forme d'haltère, qui peut s'introduire par complémentarité de forme dans des échancrures (16) en forme de découpes en anneaux de cercle des éléments de liaison (4) et qui contre une torsion de l'élément de base (15).
